# EUROPEAN PATENT SPECIFICATION

(11) **EP 2 732 178 B1**
(45) Date of publication and mention of the grant of the patent: **22.04.2015**
(21) Application number: 11743130.4
(22) Date of filing: 13.07.2011
(51) Int. Cl.: F16D 49/02, A01D 69/10, H02K 7/102

(54) **BRAKES**
BREMSEN
FREINS

(43) Date of publication of application: 21.05.2014
(73) Proprietor: Husqvarna AB, 56182 Huskvarna (SE)
(72) Inventor: ZETTERSTROM SMITH, Ian, Thirsk North Yorkshire YO7 2LJ (GB); HODGSON, Paul, High Shincliffe Durham DH1 2PT (GB)
(74) Representative: Bergquist, Kjell Gunnar
(86) International application number: PCT/GB2011/051315
(87) International publication number: WO 2013/007962

(56) References cited:
- EP-A1- 0 594 376
- GB-A- 2 475 139

## Description

This invention relates to a brake, typically for a spinning shaft such as, non-exclusively, the output shaft of an electric motor, such brake being useful, non-exclusively, in a lawnmower.

Electric motors are well known; typically, they comprise a rotary rotor surrounded by a fixed stator, with energisation of the stator causing rotation of the rotor. The rotor can be coupled to an output shaft so that the rotation can be used as desired; for example, it can be used to drive the rotating grass-cutting blade of a lawnmower.

In some situations, it is desirable that, when the motor is de-energised, the output shaft and whatever it drives ceases rotation within a defined time frame. An example of such a situation is with a lawnmower, where European Standard EN60335-2-77:2010 states that, for lawnmowers with a cutting width up to and including 600 millimetres, the cutting means shall stop from their maximum rotational speed within three seconds after the operator releases the controls that govern the operation of the cutting means.

Whilst some smaller lawnmowers can meet this standard simply based upon the air resistance and frictional forces acting on the rotating parts, for larger lawnmowers in particular it is necessary to provide a braking mechanism, known e.g. from GB 2 475 139. The inventors consider such braking mechanisms (such as that disclosed in the European Patent Application published as EP 0 594 376) to be unnecessarily complex and hence expensive to manufacture.

According to a first aspect of the invention, there is provided a brake for a shaft, comprising a carrier arranged to be fixed to the shaft for rotation therewith; at least one coil spring having coils; and a braking surface arranged to be fixed so that the shaft rotates relative to the braking surface, each coil spring being mounted in the carrier such that, as a rotational speed at which the carrier is rotated by the shaft increases, the coils of the spring move away from the shaft and the braking surface and, as the rotational speed at which the carrier is rotated by the shaft decreases, the coils of the spring move towards the shaft and the braking surface and come into contact with the braking surface so as to exert a braking force on the shaft.

By having the coils of each spring provide the braking force on the shaft, we have made an unusual use of the coils of the spring; not only do they provide mass that moves in the carrier dependent upon the rotational speed of the shaft (under the action of an apparent centrifugal force in the rotating reference frame of the carrier), but they provide what will typically be a relatively densely packed surface to act on the braking surface. Thus, a brake is provided that will slow down a shaft once the shaft starts to slow down, which is typically indicative that the shaft is no longer being driven. Furthermore, this removes the need for separate braking elements and retraction springs, making such a brake potentially cheaper to manufacture as fewer components are required.

Each spring may be mounted in the carrier so as to be biased towards the braking surface by a spring force generated by the spring. This biasing of the spring towards the braking surface may act to bring the coils of the spring into contact with the braking surface, thereby creating a frictional braking force. The force applied by the coils of the spring on the braking surface will typically decrease as the rotational speed of the shaft increases.

Typically, at least one, and typically each, spring will comprise a torsion spring, with the coils having two ends, the spring being arranged to exert a torque that resists relative rotational movement of the two ends. The two ends may be held in or against the carrier, such that, absent rotation of the shaft, the coils are biased towards the braking surface, and as the rotational speed of the shaft (and so the carrier) increases, the movement of the coils outwards tends to change the rotational separation of the ends and so increase the spring force exerted by the spring.

Typically, the coils will be mounted in the carrier such that an axis about which the coils are wound is generally parallel to an axis about which the shaft rotates. This will mean that the coils will be closer to parallel to the direction of relative motion between the coils and the braking surface than to perpendicular, typically causing less abrasion of the braking surface.

However, the invention could also be implemented with the coils wound about an axis in a plane perpendicular to the axis about which the shaft rotates. This would mean that the coils will be closer to perpendicular to the direction of relative motion between the coils and the braking surface than to parallel.

In a further alternative, at least one, and typically each, spring can be a compression spring, with an end of the coils being biased by the spring force directly against the braking surface.

At least one, if not each, spring can comprise or be wound from wire having at least one flat surface; for example, the wire could be quadrilateral, rectangular or square in cross section. The flat surface could provide a larger surface area over which to contact the braking surface. Alternatively, at least one, if not each, spring can be would from wire having a generally circular cross-section.

According to a second aspect of the invention, there is provided a braking mechanism, comprising a brake according to the first aspect of the invention and a shaft to which the carrier is fixed, the shaft being able to rotate relative to the braking surface.

According to a third aspect of the invention, there is provided a drive mechanism comprising a motor having a rotor, and a braking mechanism according to the second aspect of the invention, in which the shaft is coupled to the rotor.

The shaft may be directly coupled to the rotor (in which case the shaft will be an output shaft of the motor) or may be coupled indirectly by means of a coupling such as a geared coupling or belt drive.

The motor may comprise a housing. The braking surface may comprise part of the housing. Thus, this uses a pre-existing part of the motor as the braking surface. The material of the braking surface could be the same as the remainder or the majority of the housing of the motor; alternatively, a specific material may be provided for the braking surface, such as glass reinforced nylon.

The carrier may comprise an element that is to be driven for rotation by the motor, other than each spring. For example, the element may comprise an impeller of a lawnmower.

According to a fourth aspect of the invention, there is provided a lawnmower comprising the drive mechanism of the third aspect of the invention, a housing for the lawnmower and a grass cutting element, in which the shaft is coupled to the grass cutting element such that rotation of the shaft causes rotation of the grass cutting element. The braking surface may form part of the housing.

There now follows, by way of example only, description of embodiments of the invention described with reference to the accompanying drawings, in which:
Figure 1 shows a perspective view of motor fitted with a brake according to a first embodiment of the invention;
Figure 2 shows an exploded view of the motor and brake of Figure 1;
Figure 3 shows an end elevation of the motor and brake of Figure 1, with the shaft at rest;
Figure 4 shows an end elevation of the motor and brake of Figure 1, with the shaft rotating;
**Figure** 5 shows a perspective view of a motor and brake according to a second aspect of the invention;
Figure 6 shows an exploded view of the motor and brake of Figure 5;
Figure 7 shows an end elevation of the motor and brake of Figure 5, with the shaft at rest;
Figure 8 shows an end elevation of the motor and brake of Figure 5, with the shaft rotating; and
Figure 9 shows a motor and brake fitted to a lawnmower, in accordance with a third embodiment of the invention.

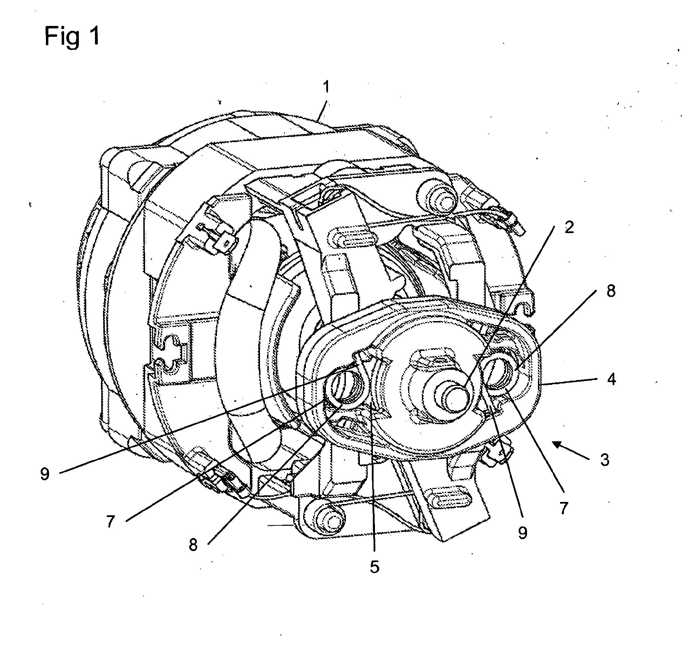

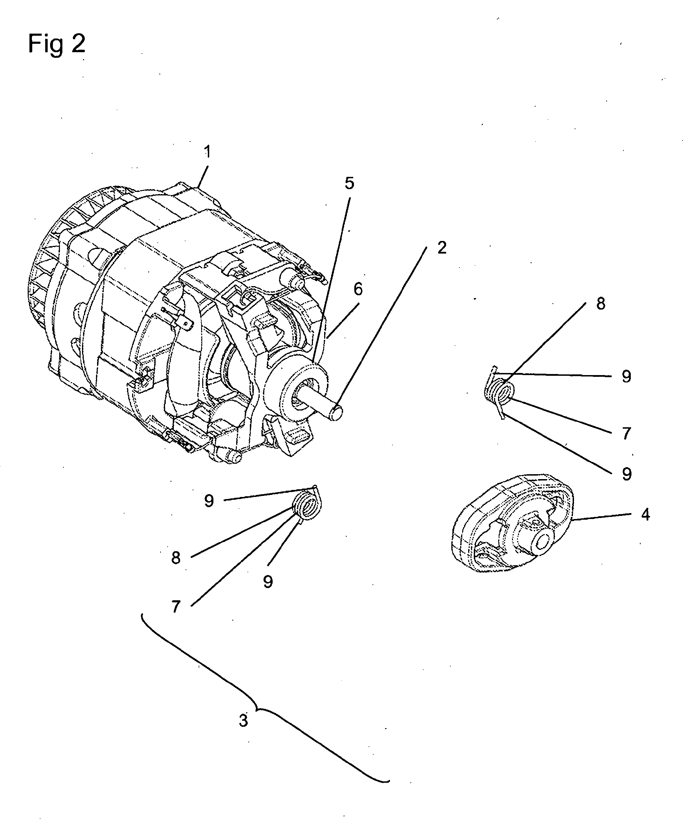

Figures 1 to 4 show a motor provided with a brake according to a first embodiment of the invention. In this embodiment a motor 1 is provided with an output shaft 2 coupled to the motor rotor (not shown). The motor 1 is arranged to rotate the shaft 2 when energised. In order to swiftly brake the shaft 2 when the motor 1 is de-energised, a brake 3 is provided. The brake 3 comprises a carrier 4 that is fixed relative to the shaft 2 and so rotates therewith and a braking surface 5 formed as an extension of a housing 6 of the motor, surrounded by the carrier 4.

The brake further comprises two helical coil torsion springs 7, mounted in the carrier 4. The springs 7 are of the form of a plurality of helical coils 8 terminated by a straight end part 9, all wound from spring wire. The straight end parts 9 are held captive in the carrier 4, with the coils 8 being able to move relative to the straight end parts 9 in the direction perpendicular to the shaft 2.

The torsional spring force generated by the springs 7 is such as to bias the coils of the spring against the braking surface 5 towards the shaft 2. As the coils 8 are moved away from the shaft 2, the angular displacement of the straight end parts 9 relative to each other changes (in this embodiment, increases), thus increasing the spring force. This means that, as the coils 8 are moved away from the shaft 2, the force tending to bias the coils 8 back towards the shaft 2 and so the braking surface 5 increases.

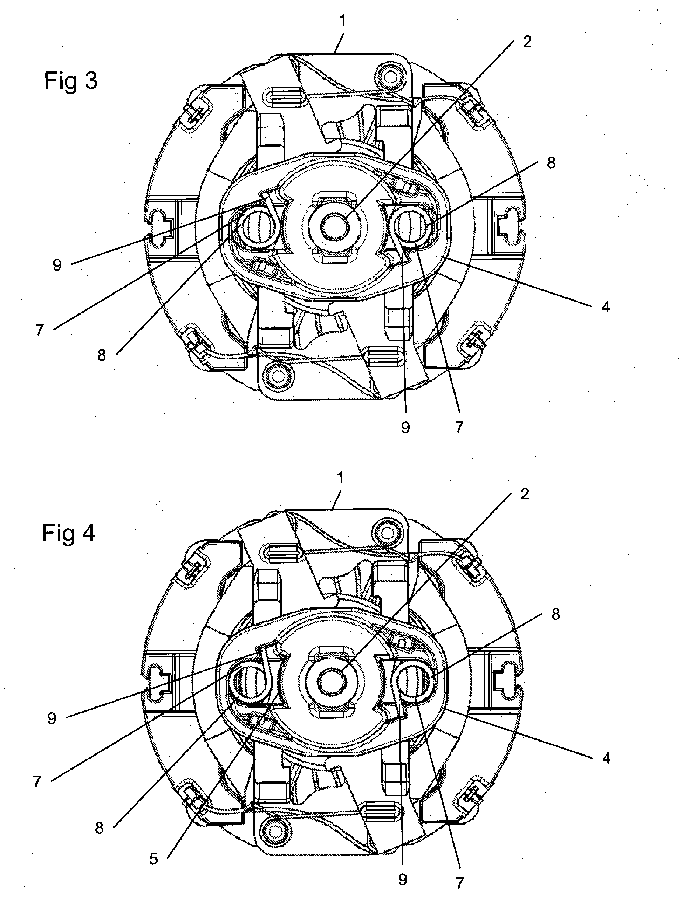

When the motor 1 is energised and so the shaft 2 is rotated at speed, the coils 8 will move outwards away from the shaft 2 relative to the carrier 4, under the apparent centrifugal force caused by rotation of the carrier 4 (strictly speaking, the centrifugal force is fictitious and a mathematical consequence of the rotating observation frame that is the carrier 4; the movement of the coils 8 relative to the carrier 4 when observed from a reference frame that is stationary relative to the motor 1 is that the reaction force of the carrier 4 on the straight end parts 9 necessary to impart the centripetal force required for circular motion tends to separate the straight end parts 9, allowing the coils 8 to move outwards). The faster the rotation of the shaft 2, the further the coils 8 move outwards. The coils 8 can be seen in this outboard position in Figure 4 of the accompanying drawings, where the coils 8 are not in contact with the braking surface.

If the motor 1 is de-energised, the shaft 2 will begin to slow under the action of air resistance on the parts driven by the shaft 2, frictional braking forces and the like. The coils 8 will move back inwards towards the shaft, as the spring force therein is released. The edges of the coils 8 will eventually contact the braking surface 5, as shown in Figure 3 of the accompanying drawings. This will vastly increase the frictional forces slowing the shaft 2, leading to quick braking of the shaft 2 to rest. Thus, if the motor is de-energised, the brake 3 will quickly cause the shaft 2 to stop.

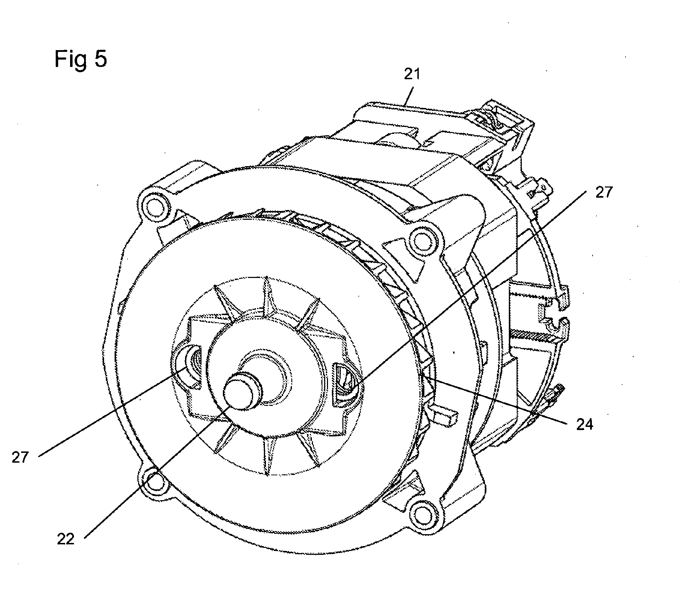

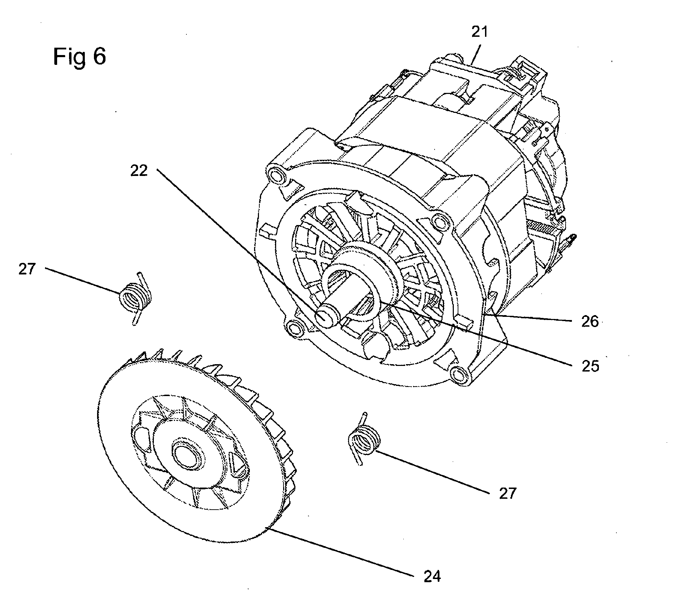

A second embodiment of the invention is depicted in Figures 5 to 8 of the accompanying drawings. In this embodiment, similar integers have been provided with the reference numerals of the first embodiment, raised by 20. This embodiment is for use in a lawnmower, and conveniently reuses a component of the lawnmower that would be provided on the shaft in any case as the carrier.

In this embodiment, the motor 21 still has an output shaft 22; however, the carrier is an impeller 24 of the lawnmower (such that may be used to generate air flow in order to cool the motor). The two springs 27 are held within the impelled 24 in exactly the same manner as in the first embodiment.

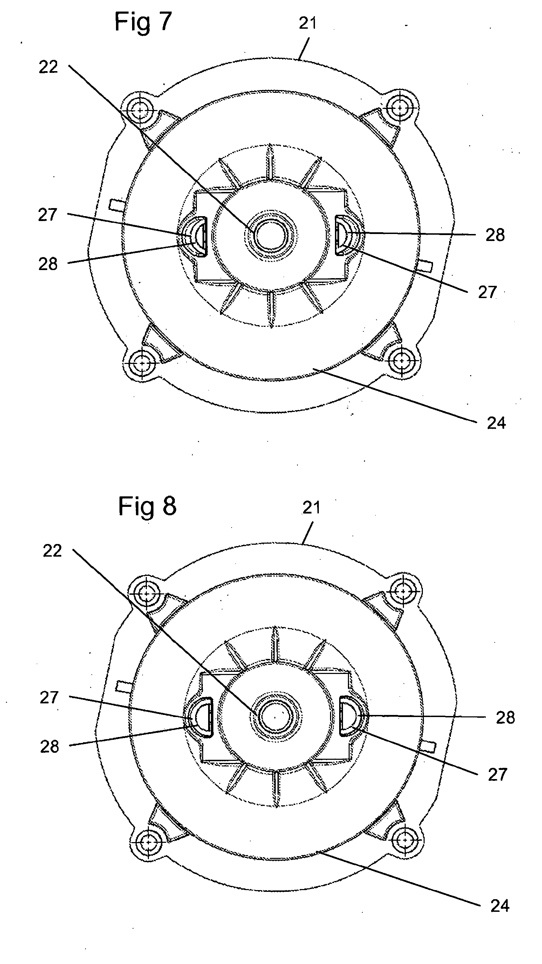

As such, the embodiment functions as described above with reference to the first embodiment; as the motor 21 is energised and the shaft 22 rotates, the coils 28 of the springs 27 will move outwards relative to the shaft 22 away from the braking surface 25 (which is again formed as part of the housing 26 of the motor) as shown in Figure 8 of the accompanying drawings. When the motor 21 is de-energised, the shaft 22 will again slow, eventually allowing the coils 28 into contact with the braking surface 25, thus swiftly bringing the shaft 22 to rest as shown in Figure 7 of the accompanying drawings.

In addition to the braking function, the impeller 24 will also generate air movement as required by the lawnmower. Thus, the impeller 24 is providing two functions: braking and air movement. A separate carrier is not required.

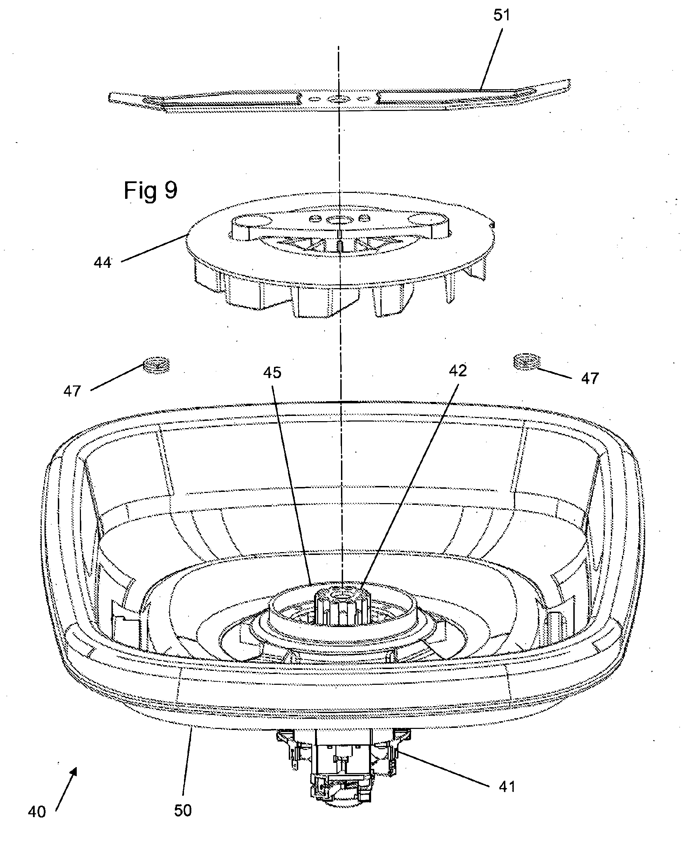

Figure 9 of the accompanying drawings shows schematically a third embodiment of the invention, where integers similar to those of the second embodiment of the invention described above have been given the corresponding reference numeral raised by 20. This embodiment forms part of a lawnmower 40.

The lawnmower 40 comprises a housing 50 supporting a motor 41. A shaft 42 is formed as the output shaft of the motor 41. On the shaft 42 is mounted a grass cutting element of the form of a blade 51. Rotation of the shaft 42 by the motor 41 causes the blade 51 to rotate, so as to cut the grass (note that Figure 9 shows the lawnmower 40 in an inverted position for reasons of clarity; the lawnmower would be operated with the blade 51 closest to the grass to be cut).

As in the second embodiment, the springs 47 are held by a carrier 44 being an impeller mounted on the shaft 42, in this embodiment for generating air movement to lift the lawnmower 40. However, in this embodiment, the braking surface 45 is formed as a cylindrical collar being part of the housing 50 of the lawnmower 40, rather than on part of the motor 41 housing. This embodiment is useful in cases where the motor directly drives, without gearing, the grass cutting element; because the braking surface can be made of a larger diameter, the braking forces for a given blade speed will be increased, as the coils will be moving over the braking surface at a higher speed.

Tests on the above three embodiments have shown that such embodiments can stop the blade of a lawnmower operating at a blade speed of between around 3000 revolutions per minute (for the first two embodiments) and around 6500 revolutions per minute (for the third embodiment) in less than three seconds even after 5000 braking cycles, and typically in less than 2.8 seconds. This represents a satisfactory braking time with fewer components than prior art brakes.

## Claims

1. A brake for a shaft 2, comprising a carrier 4 arranged to be fixed to the shaft 2 for rotation therewith; at least one coil spring 7 having coils 8; and a braking surface 5 arranged to be fixed so that the shaft 2 rotates relative to the braking surface 5, each coil spring 7 being mounted in the carrier 4 such that, as a rotational speed at which the carrier 4 is rotated by the shaft 2 increases, the coils 8 of the spring 7 move away from the shaft 2 and the braking surface 5 and, as the rotational speed at which the carrier 4 is rotated by the shaft 2 decreases, the coils 8 of the spring 7 move towards the shaft 2 and the braking surface 5 **characterised in that** the coils (8) come into contact with the braking surface 5 so as to exert a braking force on the shaft 2.

2. The brake of claim 1, in which each spring 7 is mounted in the carrier 4 so as to be biased towards the braking surface 5 by spring force generated by the spring 7 so as to act to bring the coils 8 of the spring 7 into contact with the braking surface 5, thereby creating a frictional braking force.

3. The brake of claim 1 or claim 2 in which at least one, and typically each, spring 7 comprises a torsion spring, with the coils 8 having two ends 9, the spring being arranged to exert a torque that resists relative rotational movement of the two ends 9.

4. The brake of claim 3, in which the two ends 9 are held captive in or against the carrier 4, such that, absent rotation of the shaft, the coils 8 are biased towards the braking surface 5, and as the rotational speed of the shaft 2 increases, the movement of the coils 8 outwards tends to change the rotational separation of the ends 9 and so increase the spring force exerted by the spring 7.

5. The brake of any preceding claim, in which at least one, if not each, spring 7 comprises or is wound from wire having at least one flat surface.

6. The brake of claim 5, in which the wire is quadrilateral, rectangular or square in cross section.

7. A braking mechanism, comprising a brake according to any preceding claim and a shaft 2 to which the carrier 4 is fixed, the shaft 2 being able to rotate relative to the braking surface 5.

8. A drive mechanism comprising a motor 1 having a rotor, and a braking mechanism according to claim 7, in which the shaft 2 is coupled to the rotor.

9. The drive mechanism of claim 8, in which the motor 1 comprises a housing 6, the braking surface 5 comprising part of the housing 6.

10. The drive mechanism of claim 8 or claim 9, in which the carrier 4 comprises an element that is to be driven for rotation by the motor, other than each spring.

11. The drive mechanism of claim 10, in which the element comprises an impeller 24.

12. The drive mechanism of claim 11, in which the impeller 24 is that of a lawnmower 40.

13. A lawnmower 40 comprising the drive mechanism of any of claims 8 to 12, a housing for the lawnmower 40 and a grass cutting element 51, in which the shaft 42 is coupled to the grass cutting element 51 such that rotation of the shaft 42 causes rotation of the grass cutting element.

14. The lawnmower 40 of claim 13, in which the braking surface forms part of the housing 50 for the lawnmower 40.

## Patentansprüche

1. Bremse für eine Welle 2, umfassend einenTräger 4, der dafür ausgelegt ist, an der Welle 2 fixiert zu werden, damit er sich mit dieser dreht; mindestens eine Schraubenfeder 7 mit Windungen 8 und eine Bremsfläche 5, die dafür ausgelegt ist, sofixiert zu werden, dass sich die Welle 2 relativ zur Bremsfläche 5 dreht, wobei jede Schraubenfeder 7 derart in den Träger 4 montiert ist, dass infolge einer Zunahme der Drehzahl, mit welcher der Träger 4 mittels der Welle 2 gedreht wird, die Windungen 8 der Feder 7 sich von der Welle 2 und der Bremsfläche 5 wegbewegen und infolge einer Abnahme der Drehzahl, mit welcher der Träger 4 mittels der Welle 2 gedreht wird, die Windungen 8 der Feder 7 sich zu der Welle 2 und der Bremsfläche 5 hinbewegen, **dadurch gekennzeichnet, dass** die Windungen 8 mit der Bremsfläche 5 in Kontakt kommen, um eine Bremskraft auf die Welle 2 auszuüben.

2. Bremse nach Anspruch 1, wobei jede Feder 7 so in den Träger 4 montiert ist, dass sie durch eine mittels der Feder 7 erzeugte Federkraft in Richtung der Bremsfläche 5 vorbelastet ist, um zu bewirken, dass die Windungen 8 der Feder 7 mit der Bremsfläche 5 in Kontakt gebracht werden, wodurch eine bremsende Reibungskraft erzeugt wird.

3. Bremse nach Anspruch 1 oder Anspruch 2, wobei mindestens eine und typischerweise jede Feder 7 eine Drehfeder umfasst, bei der die Windungen 8 zwei Enden 9 aufweisen, wobei die Feder dafür ausgelegt ist, ein Drehmoment auszuüben, das einer relativen Drehbewegung der zwei Enden 9 entgegenwirkt.

4. Bremse nach Anspruch 3, wobei die zwei Enden 9 im oder am Träger 4 festgehalten werden, derart, dass ohne Drehbewegung der Welle die Windungen 8 in Richtung der Bremsfläche 5 vorbelastet sind und bei Zunahme der Drehzahl der Welle 2 die Bewegung der Windungen 8 nach außen tendenziell zu einer Änderung desUmlaufabstandes der Enden 9 führt und so die von der Feder 7 ausgeübte Federkraft erhöht.

5. Bremse nach einem vorhergehenden Anspruch, wobei mindestens eine, wenn nicht gar jede Feder 7 Draht umfasst oder aus Draht gewickelt ist, der mindestens eine ebene Fläche aufweist.

6. Bremse nach Anspruch 5, wobei der Querschnitt des Drahts viereckig, rechteckig oder quadratisch ist.

7. Bremsmechanismus, umfassend eine Bremse gemäß einem vorhergehenden Anspruch und eine Welle 2, an welcher der Träger 4 fixiert ist, wobei die Welle 2 fähig ist, sich relativ zur Bremsfläche 5 zu drehen.

8. Antriebsmechanismus, umfassend einen Motor 1 mit einem Rotor und einen Bremsmechanismus gemäß Anspruch 7, wobei die Welle 2an denRotorgekoppelt ist.

9. Antriebsmechanismus nach Anspruch 8, wobei der Motor 1 ein Gehäuse 6 umfasst, wobei die Bremsfläche 5 einen Teil des Gehäuses 6 umfasst.

10. Antriebsmechanismus nach Anspruch 8 oder Anspruch 9, wobei der Träger 4 ein Element umfasst, dasanders als jede Federdurch den Motor für Drehungen angetrieben werden soll.

11. Antriebsmechanismus nach Anspruch 10, wobei das Element ein Flügelrad 24 umfasst.

12. Antriebsmechanismus nach Anspruch 11, wobei das Flügelrad 24 dasjenige eines Rasenmähers 40 ist.

13. Rasenmäher 40, umfassend den Antriebsmechanismus nach einem der Ansprüche 8 bis 12, ein Gehäuse für den Rasenmäher 40 und ein Grasschneidelement 51, wobei die Welle 42 derart an das Grasschneidelement 51 gekoppelt ist, dass ein Drehen der Welle 42 ein Drehen des Grasschneidelements bewirkt.

14. Rasenmäher 40 nach Anspruch 13, wobei die Bremsfläche einen Teil des Gehäuses 50 für den Rasenmäher 40 bildet.

## Revendications

1. Frein pour un arbre 2, comprenant un support 4 agencé pour être fixé à l'arbre 2 pour tourner avec celui-ci ; au moins un ressort hélicoïdal 7 ayant des spires 8 ; et une surface de freinage 5 agencée pour être fixée de manière à ce que l'arbre 2 tourne par rapport à la surface de freinage 5, chaque ressort hélicoïdal 7 étant monté dans le support 4 de sorte que, à mesure qu'une vitesse de rotation à laquelle le support 4 est mis en rotation par l'arbre 2 augmente, les spires 8 du ressort 7 se déplacent loin de l'arbre 2 et de la surface de freinage 5 et, à mesure que la vitesse de rotation à laquelle le support 4 est mis en rotation par l'arbre 2 diminue, les spires 8 du ressort 7 se déplacent vers l'arbre 2 et la surface de freinage 5, **caractérisé en ce que** les spires 8 viennent en contact avec la surface de freinage 5 de manière à exercer une force de freinage sur l'arbre 2.

2. Frein de la revendication 1, dans lequel chaque ressort 7 est monté dans le support 4 de manière à être sollicité vers la surface de freinage 5 par une force de ressort générée par le ressort 7 de manière à agir pour amener les spires 8 du ressort 7 en contact avec la surface de freinage 5, créant ainsi une force de freinage par friction.

3. Frein de la revendication 1 ou 2, dans lequel au moins un ressort, et généralement chaque ressort 7, comprend un ressort de torsion, avec les spires 8 ayant deux extrémités 9, le ressort étant agencé pour exercer un couple qui résiste à un mouvement de rotation relatif des deux extrémités 9.

4. Frein de la revendication 3, dans lequel les deux extrémités 9 sont maintenues captives dans le support ou contre celui-ci, de sorte que, en l'absence de rotation de l'arbre, les spires 8 soient sollicitées vers la surface de freinage 5, et à mesure que la vitesse de rotation de l'arbre 2 augmente, le déplacement des spires 8 vers l'extérieur tend à modifier la séparation par rotation des extrémités 9 et à augmenter alors la force de ressort exercée par le ressort 7.

5. Frein de l'une des revendications précédentes, dans lequel au moins un ressort, si ce n'est chaque ressort, comprend un fil ou est enroulé à partir d'un fil ayant au moins une surface plate.

6. Frein de la revendication 5, dans lequel le fil a une section transversale quadrilatérale, rectangulaire ou carrée.

7. Mécanisme de freinage, comprenant un frein selon l'une des revendications précédentes et un arbre 2 auquel le support 4 est fixé, l'arbre 2 étant capable de tourner par rapport à la surface de freinage 5.

8. Mécanisme d'entraînement comprenant un moteur 1 ayant un rotor, et un mécanisme de freinage selon la revendication 7, dans lequel l'arbre 2 est couplé au rotor.

9. Mécanisme d'entraînement de la revendication 8, dans lequel le moteur 1 comprend un boîtier 6, la surface de freinage 5 comprenant une partie du boîtier 6.

10. Mécanisme d'entraînement de la revendication 8 ou 9, dans lequel le support 4 comprend un élément qui doit être entraîné en rotation par le moteur, autre que chaque ressort.

11. Mécanisme d'entraînement de la revendication 10, dans lequel l'élément comprend une roue 24.

12. Mécanisme d'entraînement de la revendication 11, dans lequel la roue 24 est celle d'une tondeuse à gazon 40.

13. Tondeuse à gazon 40, comprenant le mécanisme d'entraînement de l'une des revendications 8 à 12, un boîtier pour la tondeuse à gazon 40 et un élément de coupe d'herbe 51, dans laquelle l'arbre 42 est couplé à l'élément de coupe d'herbe 51 de sorte que la rotation de l'arbre 42 entraîne une rotation de l'élément de coupe d'herbe.

14. Tondeuse à gazon 40 de la revendication 13, dans laquelle la surface de freinage fait partie du boîtier 50 pour la tondeuse à gazon 40.
